# EUROPÄISCHE PATENTSCHRIFT

(11) **EP 2 537 202 B1**
(45) Veröffentlichungstag und Bekanntmachung des Hinweises auf die Patenterteilung: **05.04.2017**
(21) Anmeldenummer: 11703405.8
(22) Anmeldetag: 10.02.2011
(51) Int. Cl.: H01M 8/04089, H01M 8/04119

(54) **BRENNSTOFFZELLENSYSTEM MIT WENIGSTENS EINER BRENNSTOFFZELLE**
FUEL CELL SYSTEM COMPRISING AT LEAST ONE FUEL CELL
SYSTÈME DE PILE(S) À COMBUSTIBLE COMPRENANT AU MOINS UNE PILE À COMBUSTIBLE

(30) Priorität: 15.02.2010 DE 102010007977
(43) Veröffentlichungstag der Anmeldung: 26.12.2012
(73) Patentinhaber: Daimler AG, 70327 Stuttgart (DE)
(72) Erfinder: GERHARDT, Stefan, 73278 Schlierbach (DE); MAZZOTTA, Cosimo, 89073 Ulm (DE)
(74) Vertreter: JENSEN & SON
(86) Internationale Anmeldenummer: PCT/EP2011/000632
(87) Internationale Veröffentlichungsnummer: WO 2011/098279

(56) Entgegenhaltungen:
- EP-A1- 1 383 191
- WO-A1-2008/052578
- WO-A1-2008/061094
- WO-A1-2008/154990
- WO-A2-02/056402
- DE-A1-102008 038 083
- JP-A- 2006 216 241

## Beschreibung

Die Erfindung betrifft ein Brennstoffzellensystem mit wenigstens einer Brennstoffzelle nach der im Oberbegriff von Anspruch 1 näher definierten Art.

Aus der internationalen Veröffentlichung WO 2008/052578 A1 ist ein Brennstoffzellensystem bekannt, welches eine Kreislaufführung von Anodenabgasen der Brennstoffzelle um einen Anodenbereich derselben zeigt. Dies ist in der internationalen Veröffentlichung mit der Bezeichnung Brennstoffkreis beschrieben. Außerdem ist es aus dieser internationalen Veröffentlichung bekannt, eine Ablassleitung zum Ablassen von Flüssigkeit und Gas aus dem Bereich der Kreislaufführung vorzusehen. Diese Ablassleitung, welche Flüssigkeit und Gas gemeinsam abführt, kann dabei in den Prozessluftstrom zu einem Kathodenbereich der Brennstoffzelle führen.

Die Funktionalität dieses Aufbaus ist dabei sehr gut, da in dem Gas aus der Kreislaufführung von Anodenabgasen typischerweise neben dem Wasser und sich mit der Zeit anreicherndem Stickstoff immer auch eine gewisse Menge an Restwasserstoff vorhanden ist, welche an den Katalysatoren im Kathodenbereich der Brennstoffzelle thermisch abreagiert. Damit werden Emissionen von Wasserstoff in die Umgebung des Brennstoffzellensystems sicher und zuverlässig vermieden.

Bei ungünstigen Lastsituationen, beispielsweise einem Lastsprung, kommt es dabei neben dem Eintrag einer gewissen Restmenge an Wasserstoff in den Kathodenbereich auch zu einem Eintrag von vergleichsweise viel Wasser in den Bereich der Kathode. Insbesondere wenn die Prozessluft über einen Befeuchter, wie es häufig üblich ist, bereits befeuchtet ist, dann wird dieses Wasser größtenteils flüssig im Kathodenbereich ankommen. Es kann dann zu einer Verschlechterung der Performance der Brennstoffzelle führen, indem es Kanäle für die Prozessluft versperrt oder entsprechende Oberflächen benetzt. Dadurch können einzelne Zellen der typischerweise als Zellenstapel aufgebauten Brennstoffzelle aufgrund einer Unterversorgung mit Prozessluft Spannungseinbrüche verzeichnen. Im schlimmsten Fall kann es sogar zu einer Umpolung einzelner Zellen kommen, sodass die Funktion der Brennstoffzelle nachhaltig gestört ist.

Die Aufgabe der hier vorliegenden Erfindung ist es nun ein Brennstoffzellensystem mit wenigstens einer Brennstoffzelle anzugeben, welches diese Nachteile vermeidet und das System aus dem eingangs genannten Stand der Technik so weiterbildet, dass dieses in allen Betriebssituationen zuverlässig und mit besten Leistungseigenschaften arbeitet.

Erfindungsgemäß wird diese Aufgabe durch ein Brennstoffzellensystem mit den Merkmalen im kennzeichnenden Teil von Anspruch 1 gelöst. Vorteilhafte Ausgestaltungen und Weiterbildungen des erfindungsgemäßen Brennstoffzellensystems ergeben sich aus den abhängigen Ansprüchen.

Erfindungsgemäß ist es nun so, dass die Ablassleitung in ein Leitungselement für den Prozessluftstrom, also weiterhin vor dem Kathodenbereich der Brennstoffzelle mündet. Allerdings ist diese Leitung erfindungsgemäß so ausgelegt, dass sie von einer unteren Position in eine beim bestimmungsgemäßen Einsatz in Richtung der Schwerkraft höher angeordneten oberen Position verläuft. Die Strömung der Prozessluft verläuft dabei ebenfalls von der unteren Position zu der oberen Position. Die Ablassleitung mündet also in ein steigendes Rohr mit nach oben gerichteter Strömung der Prozessluft. Dies hat entscheidende Vorteile. Das aus der Ablassleitung kommende Gas, typischerweise Wasserstoff, wird in jedem Fall von der Strömung mitgerissen und wandert in den Kathodenbereich der Brennstoffzelle, wo er in an sich bekannter Art und Weise thermisch umgesetzt wird. Selbst bei niedrigen Strömungsgeschwindigkeiten, beispielsweise im Leerlauf des Brennstoffzellensystems, ist dies gewährleistet. Sollte aus irgendwelchen Gründen, zum Beispiel einem abgestellten Brennstoffzellensystem in der Stoppphase eines Start-/Stopp-Betriebs, keine Strömung in dem Leitungselement herrschen, so steigt der Wasserstoff aufgrund seiner geringen Dichte dennoch in Richtung der Schwerkraft nach oben und gelangt somit in den Bereich des Eingangs zum Kathodenbereich der Brennstoffzelle. Die über die Ablassleitung in das Leitungselement eingetragene Flüssigkeit, typischerweise Wasser, wird bei höheren Strömungsgeschwindigkeiten zum Teil ebenfalls von der Strömung mitgerissen und gelangt so, wie bisher auch, in den Kathodenbereich der Brennstoffzelle. Dies ist bei höherem Prozessluftstrom vergleichsweise unkritisch, da in diesen Situationen eine im Verhältnis zur Prozessluft eher geringe Menge an Flüssigkeit in den Kathodenbereich der Brennstoffzelle eingetragen wird. Ein weiterer Teil wird in jedem Fall auch aufgrund der Schwerkraft in dem Leitungselement herunterlaufen. Je niedriger nun die Strömungsgeschwindigkeit des Prozessluftstroms ist, desto höher ist der Flüssigkeitsanteil, der in dem Leitungselement herabläuft und nicht in den Kathodenbereich der Brennstoffzelle gelangt. Wird eine bestimmte Strömungsgeschwindigkeit des Prozessluftstroms unterschritten, so läuft die gesamte Flüssigkeit in dem Leitungselement herab.

Mit diesem erfindungsgemäßen Aufbau des Brennstoffzellensystems lässt sich der Eintrag von größeren Mengen an Flüssigkeiten beziehungsweise Wasser in den Kathodenbereich einer Brennstoffzelle sicher und zuverlässig vermeiden, sodass die Brennstoffzelle über sämtliche Betriebssituationen hinweg eine vergleichsweise gute und gleichmäßige Leistungsfähigkeit zeigt.

Dieser Aufbau ermöglicht es damit auch, dass das Brennstoffzellensystem mit einer hohen Dynamik hinsichtlich der Leistung betrieben wird, ohne dass dadurch massive Leistungseinbrüche oder dergleichen zu befürchten wären. Dies prädestiniert das Brennstoffzellensystem mit dem erfindungsgemäßen Aufbau zum Einsatz in einem Fahrzeug, in welchem es beispielsweise die Antriebsenergie zum elektrischen Antreiben des Fahrzeugs liefert. Da insbesondere beim Antrieb von Fahrzeugen hochdynamische Leistungsprofile erforderlich sind, ist der oben beschriebene Aufbau für eine derartige Verwendung von besonderem Vorteil.

Gemäß einer besonders günstigen und vorteilhaften Weiterbildung des erfindungsgemäßen Brennstoffzellensystems ist es darüber hinaus vorgesehen, dass das Leitungselement in einem Winkel von mehr als 45 Grad, insbesondere mehr als 80 Grad gegenüber der Waagrechten verläuft. Die erfindungsgemäße Funktionalität funktioniert grundsätzlich bei jeder in einem entsprechenden Winkel nach oben verlaufenden Leitungselement. Je steiler der Winkel verläuft, desto besser kann die Flüssigkeit entgegen der Strömung der Prozessluft nach unten ablaufen. Ideal wäre ein senkrecht nach oben verlaufendes Leitungselement oder ein zumindest in einem Winkel von mehr als 45 Grad oder insbesondere mehr als 80 Grad nach oben verlaufenden Leitungselement. Da ein solches Leitungselement gegenüber einem senkrecht nach oben verlaufenden Leitungselement häufig hinsichtlich des Packagings des Brennstoffzellensystems, insbesondere beim oben genannten bevorzugten Einsatz in einem Fahrzeug, leichter zu realisieren ist, kann durchaus auch ein steil nach oben verlaufendes Rohr eingesetzt werden, welches nicht unmittelbar senkrecht auf der Waagrechten steht.

In einer weiteren sehr günstigen und vorteilhaften Ausgestaltung des erfindungsgemäßen Brennstoffzellensystems ist es darüber hinaus vorgesehen, dass die Ablassleitung im Bereich der Mündung in das Leitungselement so ausgebildet ist, dass die eingetragene Flüssigkeit und das eingetragene Gas in den Bereich der Wandungen des Leitungselements gelangt. Insbesondere bei einem Einbringen des Gases und der Flüssigkeit aus der Ablassleitung in den Bereich der Wandungen des Leitungselements kann die Flüssigkeit im Bereich der Wandungen sehr leicht herablaufen, da hier aufgrund der Reibung zwischen der Strömung der Prozessluft und den Wandungen die Strömungsgeschwindigkeit immer etwas geringer ist.

In einer weiteren sehr günstigen und vorteilhaften Ausgestaltung des erfindungsgemäßen Brennstoffzellensystems ist es ferner vorgesehen, dass im Bereich der Mündung der Ablassleitung in das Leitungselement sich der Querschnitt des Leitungselements zumindest vorübergehend erweitert. Durch eine solche Erweiterung des durchströmbaren Querschnitts des Leitungselements wird bei konstantem Volumenstrom der Prozessluft eine Verringerung der Strömungsgeschwindigkeit im Bereich dieser Prozessluft aufgrund des größeren durchströmbaren Querschnitts erreicht. Durch die Verringerung der Geschwindigkeit der Prozessluft zumindest im Bereich der Mündung der Ablassleitung in das Leitungselement können also sehr vorteilhafte Strömungsbedingungen geschaffen werden, um ein Herablaufen der Flüssigkeit in dem Leitungselement auch bei höherem Prozessluftstrom zu begünstigen.

In einer weiteren sehr vorteilhaften Weiterbildung des erfindungsgemäßen Brennstoffzellensystems kann es außerdem vorgesehen sein, dass die Ablassleitung im Bereich der Mündung in das Leitungselement so ausgebildet ist, dass die eingetragene Flüssigkeit und das eingetragene Gas zumindest teilweise entgegen der Strömungsrichtung des Prozessluftstroms einströmen. Auch bei diesem Aufbau, bei dem die Stoffe aus der Ablassleitung entgegen oder mit einer Bewegungskomponente entgegen der Strömungsrichtung des Prozessluftstroms eingebracht werden, wird ein sehr vorteilhafter Effekt hinsichtlich des Herablaufens der Flüssigkeit in dem Leitungselement erzielt. Das aufgrund eines Druckunterschieds aus der Ablassleitung in den Bereich des Leitungselements einströmende Stoffgemisch weist also eine gewisse Geschwindigkeit im Bereich der Einströmung auf. Durch ein gerichtetes Einströmen entgegen der Geschwindigkeit des Prozessluftstroms muss die Geschwindigkeit des einströmenden Stoffgemischs zuerst mit Energie aus dem Prozessluftstrom umgekehrt werden, ehe dieser das Gas und insbesondere die Flüssigkeit mitreißen kann. Aufgrund der sehr geringen Dichte von Wasserstoff wird dieser in jedem Fall eine Umkehr seiner Strömungsrichtung erfahren und mitgerissen werden. Bei den eher schweren Flüssigkeitströpfchen wird dies nur bei höheren Strömungsgeschwindigkeiten des Prozessluftstroms der Fall sein, sodass ein Großteil der Flüssigkeit entgegen der Strömungsrichtung des Prozessluftstroms in dem Leitungselement, und hier insbesondere im Bereich der Wandungen des Leitungselements herablaufen beziehungsweise herabtropfen wird.

In einer sehr günstigen Ausgestaltung des erfindungsgemäßen Brennstoffzellensystems ist es ferner vorgesehen, dass in Strömungsrichtung der Prozessluft vor oder im Bereich der unteren Position ein Behälter zum Sammeln von Flüssigkeit angeordnet ist. Ein solcher Behälter kann die in dem Leitungselement herablaufende Flüssigkeit aufnehmen und diese entsprechend bevorraten, sodass der Prozessluftstrom die angesammelte Flüssigkeit nicht in Richtung des Kathodenbereichs der Brennstoffzelle mitreißen kann. In einer vorteilhaften Weiterbildung hiervon kann es außerdem vorgesehen sein, dass der Behälter zum Sammeln von Flüssigkeit über eine Leitung mit der aus dem Kathodenbereich der Brennstoffzelle strömenden Abluft verbunden ist. Eine solche Leitung, welche entweder über eine Blende oder eine Engstelle oder auch über ein Ventil verfügen kann, kann eine Verbindung des Behälters mit der Abluft aus der Brennstoffzelle erreicht werden. Damit kann sich sammelnde Flüssigkeit über die Abluft der Brennstoffzelle aus dem Brennstoffzellensystem geführt werden, um so den Eintrag beziehungsweise das Durchströmen des Kathodenbereichs mit der Flüssigkeit zu verhindern.

In einer weiteren sehr vorteilhaften Ausgestaltung des erfindungsgemäßen Brennstoffzellensystems ist es darüber hinaus vorgesehen, dass das Leitungselement zwischen einem Befeuchter und dem Kathodenbereich der Brennstoffzelle angeordnet ist, wobei der Behälter zum Sammeln von Flüssigkeit und/oder die Leitung in den Befeuchter integriert ausgebildet ist. Brennstoffzellensysteme verfügen sehr häufig über Befeuchter, um die Prozessluft nach dem Verdichten und vor dem Einströmen in den Kathodenbereich entsprechend zu befeuchten. Dies ist insbesondere bei Brennstoffzellen, welche als Stapel von PEM-Brennstoffzellen aufgebaut sind, besonders wichtig, um die PE-Membranen vor der Austrocknung zu schützen. Derartige Befeuchter sind dabei häufig so aufgebaut, dass über eine für Wasserdampf durchlässige Membran der Prozessluftstrom zu dem Kathodenbereich der Brennstoffzelle von dem Abluftstrom aus dem Kathodenbereich der Brennstoffzelle getrennt geführt wird. Da der Abluftstrom aus dem Kathodenbereich der Brennstoffzelle mit dem in der Brennstoffzelle entstehenden Produktwasser größtenteils dampfförmig, zum Teil auch in Form von Tröpfchen, beladen ist, kann dieser Abluftstrom den vergleichsweise wärmeren und trockneren Prozessluftstrom zu dem Kathodenbereich der Brennstoffzelle entsprechend befeuchten. In einen solchen Befeuchter kann nun entweder der Behälter und/oder die Leitung integriert werden. Der bauliche Aufwand kann dabei minimiert werden, da lediglich in dem Befeuchter eine über eine Drosselstelle oder eine Ventileinrichtung ausgestattete Verbindung zwischen dem Abluftbereich und dem Behälter im Bereich der Prozessluft geschaffen werden muss.

In einer weiteren sehr günstigen Ausgestaltung des erfindungsgemäßen Brennstoffzellensystems ist es ferner vorgesehen, dass der Behälter beheizbar ausgebildet ist. Dadurch kann im Bereich des Behälters angesammelte Flüssigkeit aufgrund der Beheizung verdampft werden und dient so zur weiteren Befeuchtung des Prozessluftstroms. Die Beheizung kann dabei aktiv beispielsweise durch ein elektrisches Heizelement oder dergleichen erfolgen. Bei entsprechend robusten Membranen ermöglicht dieser Aufbau gegebenenfalls sogar den Verzicht auf einen Befeuchter, da durch die aktive Verdampfung der angesammelten Flüssigkeit in dem Behälter eine gegebenenfalls ausreichende Befeuchtung des Prozessluftstroms, welcher dann vergleichsweise heiß und trocken im Bereich des Behälters anlangt, erzielt werden kann.

In einer alternativen Ausgestaltung hiervon ist es außerdem vorgesehen, dass der Behälter mit einer wärmeerzeugenden Komponente in wärmeleitenden Kontakt steht. Das Verdampfen der sich in dem Behälter sammelnden Flüssigkeit kann dann zur Befeuchtung des Prozessluftstroms einerseits und andererseits zur zumindest teilweisen Kühlung der mit ihm in thermischem Kontakt stehenden wärmeerzeugenden Komponente, beispielsweise einer elektromotorischen Komponente, einer Leistungselektronik oder Ähnlichem, dienen.

Vorteilhafte Ausgestaltungen und Weiterbildungen des erfindungsgemäßen Brennstoffzellensystems ergeben sich außerdem anhand des Ausführungsbeispiels, welches nachfolgend unter Bezugnahme auf die Figuren näher beschrieben ist.

Dabei zeigen:
- Fig. 1: ein beispielhaftes Brennstoffzellensystem in einer möglichen Ausführungsform gemäß der Erfindung; und
- Fig. 2 - Fig. 5: verschiedene bevorzugte Ausgestaltungen des Bereichs der Einmündung einer Ablassleitung in ein Leitungselement.

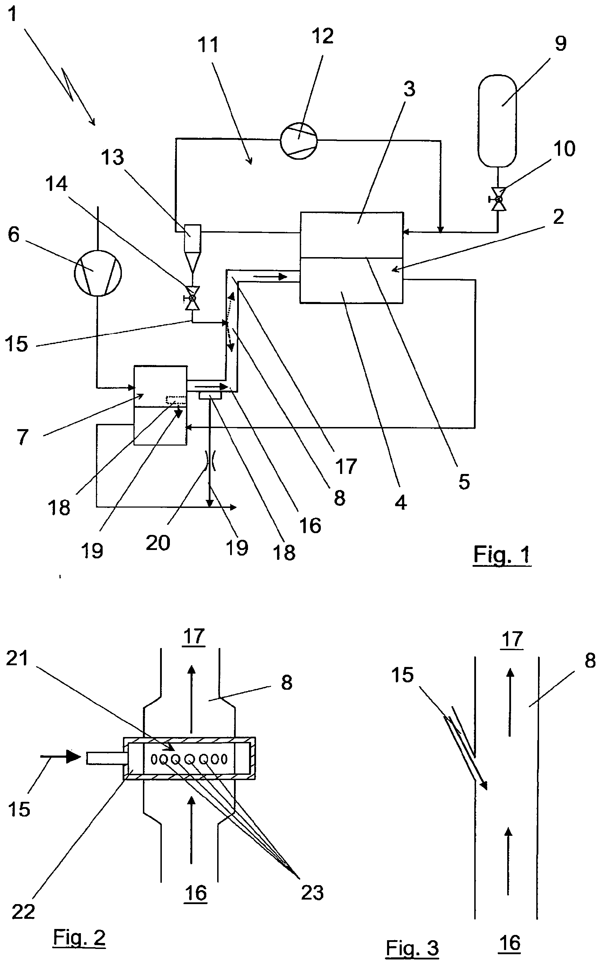

In der Darstellung der Figur 1 ist beispielhaft ein mögliches Brennstoffzellensystem 1 zu erkennen, wie es beispielsweise zur Bereitstellung von elektrischer Antriebsleistung für ein Fahrzeug ausgebildet sein kann. Den Kern des Brennstoffzellensystems 1 bildet dabei eine Brennstoffzelle 2, welche bevorzugt als Stapel von PEM-Brennstoffzellen aufgebaut sein soll. Dabei wird ein Anodenbereich 3 der Brennstoffzelle 2 von einem Kathodenbereich 4 der Brennstoffzelle durch protonenleitende Polymermembranen 5 getrennt. Diesem an sich bekannten Aufbau der Brennstoffzelle 2 wird über einen Verdichter 6 Prozessluft zur Versorgung des Kathodenbereichs 4 der Brennstoffzelle 2 mit Sauerstoff zugeführt. Diese Prozessluft kann nach dem Verdichter 6 über einen an sich bekannten, hier jedoch optional zu sehenden Befeuchter 7 geführt werden, in welchem die Prozessluft durch für Wasserdampf durchlässige Membranen von der Abluft aus dem Kathodenbereich 4 getrennt strömt. Da die Abluft aus dem Kathodenbereich 4 mit dem teilweise dampfförmig und teilweise flüssig vorliegenden Produktwasser der Brennstoffzelle 2 beladen ist, kann zumindest der Wasserdampf aus der Abluft des Kathodenbereichs 4 durch die Membranen hindurch in dem Befeuchter 7 den Prozessluftstrom befeuchten. Dieser so befeuchtete oder zumindest teilweise befeuchtete Prozessluftstrom gelangt dann durch eine Leitung 8 in den Kathodenbereich 4 der Brennstoffzelle 2. Der befeuchtete Pressluftstrom kann so zur Verminderung der Austrocknung der Polymermembranen 5 beitragen. Der Abluftstrom gelangt wiederum, wie soeben bereits beschrieben, durch den Befeuchter 7 und kann dann in die Umgebung abgegeben werden. Gegebenenfalls kann auch über eine Turbine in dem Abluftstrom befindliche Restenergie genutzt werden.

Dem Anodenbereich 3 der Brennstoffzelle 2 wird in dem hier dargestellten Ausführungsbeispiel Wasserstoff aus einem Druckgasspeicher 9 über eine Ventileinrichtung 10, welche die Wasserstoffzufuhr regelt und den Druck mindert, zugeführt. In dem Druckgasspeicher 9 ist der Wasserstoff typischerweise unter sehr hohen Drücken, beispielsweise unter Drücken oberhalb von 700 bar, gespeichert.

Um den gesamten Anodenbereich 3 der Brennstoffzelle und hier die gesamte zur Verfügung stehende Oberfläche der Polymermembranen 5 mit einer ausreichenden Menge an Wasserstoff zu versorgen, wird typischerweise mehr Wasserstoff zum Anodenbereich 3 geführt, als in diesem umgesetzt werden kann. Der verbleibende Restwasserstoff wird dann über eine Kreislaufführung 11 und eine Rezirkulationsfördereinrichtung 12 als Anodenabgas im Kreislauf um den Anodenbereich 3 geführt und gelangt vermischt mit frischem Wasserstoff aus dem Druckgasspeicher 9 dann erneut in den Anodenbereich 3. Mit der Zeit wird sich in dieser Kreislaufführung 11 in an sich bekannter Art und Weise Stickstoff und Wasser anreichern. Um nun immer eine ausreichend hohe Konzentration an Wasserstoff im Anodenbereich 3 verfügbar zu haben, muss das Wasser und das inerte Gas, üblicherweise Stickstoff, welcher durch die Polymermembranen 5 aus dem Kathodenbereich 4 in den Anodenbereich 3 diffundiert ist, ausgeblasen werden. Hierfür dient ein Wasserabscheider 13, in welchem sich das Wasser aus der Kreislaufführung 11 entsprechend sammelt. Dieser ist über eine Ventileinrichtung 14 mit einer Ablassleitung 15 verbunden. Wird nun die Ventileinrichtung 14 geöffnet, so gelangt zuerst das Wasser durch die Ablassleitung 15 und dann das in der Kreislaufführung 11 befindliche Gas, wodurch der unerwünschte Stickstoff und leider immer auch eine gewisse Menge an Wasserstoff aus der Kreislaufführung 11 ausgeblasen wird. Dieser Vorgang wird beim Wasser als Drain, bei den Gasen als Purge bezeichnet.

Um nun keine Wasserstoffemissionen an die Umgebung des Brennstoffzellensystems 1 zu verursachen, mündet die Ablassleitung 15 so in den zu dem Kathodenbereich 4 der Brennstoffzelle 2 strömenden Prozessluftstrom, dass die über die Ablassleitung 15 ausgetragenen Stoffe über den Prozessluftstrom in den Kathodenbereich 4 der Brennstoffzelle 2 eingetragen werden. Eventueller Restwasserstoff kann dann im Bereich der Elektrokatalysatoren des Kathodenbereichs 4 thermisch reagieren. Dieses Vorgehen gemäß dem Stand der Technik kann in bestimmten Betriebssituationen ungünstig sein, da das in den Kathodenbereich 4 eingebrachte Wasser zu Spannungseinbrüchen oder zur Verstopfung von Luftkanälen im Bereich einzelner Zellen der Brennstoffzelle 2 führen kann. Dadurch wird die Performance und Leistungsfähigkeit der Brennstoffzelle 2 gegebenenfalls eingeschränkt.

Mit dem Aufbau der Erfindung lässt sich dies verhindern. Wie in der Darstellung der Figur 1 zu erkennen ist, verläuft das Leitungselement 8 als steigendes Leitungselement 8 von einer unteren Position 16 zu einer oberen Position 17, sodass beim bestimmungsgemäßen Einsatz die Strömung der Prozessluft entgegen der Schwerkraft nach oben durch das Leitungselement 8 und dann in den Kathodenbereich 4 der Brennstoffzelle 2 erfolgt. Im Bereich dieses Leitungselements 8 mündet nun die Ablassleitung 15, beispielsweise mittig, in dem schräg oder senkrecht nach oben, von der unteren Position 16 zur oberen Position 17, verlaufenden Bereich des Leitungselements 8. In allen typischen Betriebssituationen wird dabei der in der Ablassleitung 15 enthaltene Wasserstoff, wie durch den punktierten Pfeil angedeutet, von der Strömung der Prozessluft mitgerissen und gelangt in den Kathodenbereich 4, in welchem er, wie bereits erwähnt und wie aus dem Stand der Technik bekannt, thermisch im Bereich der Elektrokatalysatoren des Kathodenbereichs 4 umgesetzt wird. Dies ist selbst bei niedrigen Strömungsgeschwindigkeiten gewährleistet und lässt sich auch dann erreichen, wenn in bestimmten Betriebssituationen, beispielsweise bei einem vorübergehenden Stillstand des Brennstoffzellensystems 1 im Rahmen eines Start-/Stopp-Betriebs in einem Fahrzeug dieses abgeschaltet ist, da der Wasserstoff aufgrund seiner geringen Dichte im Bereich des Leitungselements 8 nach oben aufsteigt und so in den Kathodenbereich 4 der Brennstoffzelle 2 gelangt.

Das ebenfalls über die Abluftleitung 15 in den Bereich des Leitungselements 8 geförderte Wasser, welches überwiegend flüssig vorliegt, wird, wie durch den gestrichelten Pfeil angedeutet, in Richtung der Schwerkraft in dem Leitungselement 8 nach unten, also in den Bereich der unteren Position 16 fließen beziehungsweise die Tröpfchen werden entgegen der Strömung des Prozessluftstroms in den Bereich der unteren Position fallen. Teile des Wassers werden dabei in dem gegebenenfalls noch nicht mit Wasserdampf gesättigten Prozessluftstrom verdampft und können der Verbesserung der Befeuchtung des Prozessluftstroms dienen. Das flüssige Wasser gelangt im Bereich der unteren Position 16 an und läuft entweder zurück in den Befeuchter 7 oder sammelt sich in einem optionalen Behälter 18, welcher entweder im Bereich der unteren Position 16 oder im Befeuchter 7 angeordnet sein kann. Dies wird typischerweise bei langsamen und mittelschnellen Strömungsgeschwindigkeiten des Prozessluftstroms ohne weitere Einschränkungen funktionieren. Nur bei sehr hohen Strömungsgeschwindigkeiten des Prozessluftstroms wird ein Teil des Wassers mitgerissen und gelangt, wie bisher auch, in den Kathodenbereich 4 der Brennstoffzelle 2. Da ein sehr hoher Prozessluftstrom mit entsprechend hohen Strömungsgeschwindigkeiten jedoch nur bei einer hohen Leistung der Brennstoffzelle 2 selbst auftritt, ist dies in diesen Situationen vergleichsweise unkritisch, da durch den hohen Volumenstrom der Prozessluft und die aufgrund der hohen Leistung entstehende hohen Abwärme der Brennstoffzelle 2 der prozentuale Anteil des Wassers vergleichsweise gering ist und dieses in der Wärme der Brennstoffzelle überwiegend verdampfen kann.

Somit ist insbesondere für die Situationen, in denen aufgrund eines Betriebs im niedrigen Lastpunkt und/oder im Leerlauf der Eintrag von Wasser in den Kathodenbereich 4 der Brennstoffzelle 2 höchst unerwünscht ist, eine sichere Lösung gefunden, welche mit minimalem Aufwand ein Eindringen von Wasser, zumindest in größeren Mengen, in den Kathodenbereich 4 der Brennstoffzelle 2 verhindern kann. Das Wasser kann sich dann in dem bereits erwähnten Behälter 18 sammeln, welcher hier in zwei optionalen Positionen dargestellt ist. Die durchgezogene Darstellung des Behälters 18 im Bereich des Leitungselements 8 zwischen dem Befeuchter 7 und der unteren Position 16 des Leitungselement 8 erlaubt ein Sammeln des Wassers, bevor dieses in den Befeuchter 7 zurückfließt. Durch ein Leitungselement 19 kann dieses Wasser in den Bereich der Abluftströmung, hier beispielsweise in den Bereich der Abluftströmung nach dem Befeuchter 7 abströmen und wird aus dem System ausgetragen. Im Bereich der Leitung 19 ist dazu ein Drosselelement 20 angedeutet. Eine Ventileinrichtung wäre anstelle des Drosselelements 20 ebenso denkbar. Die zweite gestrichelt dargestellte Alternative für den Behälter 18 sieht diesen integriert in den Befeuchter 7 vor. Dann reicht eine einfache, ebenfalls mit einem Drosselelement oder optional einer Ventileinrichtung versehene Leitung 19' zwischen der Zuluftseite des Befeuchters 7 und der Abluftseite desselben aus, um einen vergleichbaren Effekt zu erreichen.

Optional kann es nun vorgesehen sein, dass der Behälter 18, welcher von der Prozessluft im Befeuchter 7 beziehungsweise aus dem Befeuchter 7 überströmt wird, so ausgestaltet ist, dass das Wasser, welches sich im Behälter 18 sammelt, in der noch nicht zu 100 Prozent mit Feuchtigkeit gesättigten Prozessluft nachverdampfen kann. Dies kann entweder passiv durch den reinen Kontakt mit der Prozessluft erfolgen, oder aktiv, indem der Behälter 18 entsprechend beheizt wird. Eine solche Beheizung könnte beispielsweise aktiv durch ein elektrisches Heizelement erfolgen. Alternativ oder ergänzend hierzu wäre es auch denkbar, den Behälter 18 in wärmeleitendem Kontakt zu einer wärmeerzeugenden Komponente auszubilden. Durch die Erwärmung wird dann ebenfalls die Verdampfung der Flüssigkeit und damit die weitere Befeuchtung des Prozessluftstroms ermöglicht. Außerdem kann durch die Verdampfung und den wärmeleitenden Kontakt zu einer wärmeerzeugenden Komponente diese gleichzeitig gekühlt werden. Denkbare Beispiele für eine solche wärmeerzeugende Komponente, welche außerdem von einer Kühlung durch das verdampfende Wasser profitieren könnte, wären beispielsweise elektromotorische Komponenten, insbesondere ein Elektromotor der Rezirkulationsfördereinrichtung 12, des Verdichters 6 oder dergleichen. Auch andere Komponenten, wie beispielsweise leistungsmotorische Komponenten, oder die Anbindung an einen Kühlkreislauf der Brennstoffzelle 2 wäre denkbar.

In den Darstellungen der Figuren 2 bis 5 sind nun verschiedene Möglichkeiten dargestellt, um durch eine geschickte Ausgestaltung der Mündung der Ablassleitung 15 in das Leitungselement 8 ein Herablaufen des Wassers entgegen der Strömungsgeschwindigkeit in dem Leitungselement 8 zu erleichtern.

In der Darstellung der Figur 2 erfolgt das Einbringen der Stoffe aus der Ablassleitung 15 über eine Ringdüse 21, bei welcher ein Ringraum 22 von den Stoffen aus der Ablassleitung 15 geflutet wird und über entsprechende Öffnungen 23 mit dem Leitungselement 8 verbunden ist. Im Bereich der Ringeindüsung 21 ist der Querschnitt des Leitungselements 8 entsprechend erweitert. Bei konstantem Volumenstrom der Prozessluft kommt es bei einer solchen Querschnittserweiterung zu einer Verringerung der Strömungsgeschwindigkeit. In das Leitungselement 8 eingebrachtes Wasser kann so entgegen der durch die Pfeile dargestellten Strömung der Prozessluft in Richtung der Schwerkraft dem Leitungselement 8 herabfallen und entlang der Wandungen desselben in die untere Position 16 ablaufen.

In der Darstellung der Figur 3 ist das Leitungselement 8 ohne sich erweiternden Querschnitt dargestellt. Die Anbindung der Ablassleitung 15 ist dabei so gestaltet, dass die Stoffe aus der Ablassleitung 15 entgegen oder zumindest mit einer Richtungskomponente entgegen der Strömungsrichtung der Prozessluft und damit der Schwerkraft schräg nach unten, in den Bereich des Leitungselements 8 eingebracht werden. Der vergleichsweise leichte Wasserstoff wird dann sehr schnell von der Strömung der Prozessluft mitgerissen. Das schwerere Wasser muss erst in seiner Strömungsrichtung umgekehrt werden, sodass ein Großteil des Wassers nicht von der Strömung der Prozessluft mitgerissen wird, sondern in Richtung der unteren Position 16 ablaufen kann.

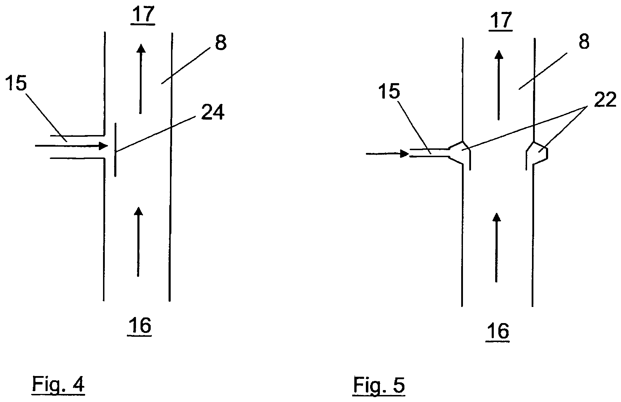

In der Darstellung der Figur 4 ist eine weitere Alternative dargestellt, bei der die Mündung der Ablassleitung 15 so ausgestaltet ist, dass diese in einem annähernd rechten Winkel in den Bereich des Leitungselements 8 erfolgt. Um zu verhindern, dass die aus der Ablassleitung 15 ausströmenden Stoffe, und hier insbesondere das Wasser, in den zentralen Bereich der Prozessluftströmung gelangt, ist ein Prallblech 24 vorgesehen, welches die aus der Ablassleitung 15 kommende Strömung umlenkt und so dafür sorgt, dass insbesondere das flüssige Wasser im Bereich der Wandungen des Leitungselements 8 in die untere Position 16 abfließen kann. Ein ähnlicher Aufbau mit einem ringförmigen Prallblech wäre selbstverständlich auch beim Einsatz einer Ringeindüsung denkbar.

In Figur 5 ist letztlich ein Aufbau dargestellt, bei dem hier wieder über einen Ringkanal 22 die aus Ablassleitung 15 stammenden Stoffe in den Bereich des Leitungselements 8 einströmen. Über geeignete Leitelemente 25 wird hierbei für eine Einströmung entgegen der Strömungsrichtung des Prozessluftstroms und gleichzeitig für eine Einströmung entlang der Wandung des Leitungselements 8 gesorgt. Auch dies erleichtert das Abfließen des flüssigen Wassers zur unteren Position 16, während der Wasserstoff durch die Prozessluftströmung dennoch mitgerissen wird.

Die in den Figuren 2 bis 5 dargestellten Varianten sind dabei rein beispielhaft zu verstehen und können untereinander beliebig kombiniert werden. Sie dienen dazu, den erfindungsgemäßen Effekt, welcher auch bei einer rein T-förmigen Mündung der Ablassleitung 15 in das Leitungselement 8 zu erzielen wäre, noch weiter zu verbessern und den Wert der Strömungsgeschwindigkeit der Prozessluft, ab welchem kein Wasser von dem Prozessluftstrom mehr mitgerissen wird, zu vergrößern.

Alles in allem erlaubt der erfindungsgemäße Aufbau des Brennstoffzellensystems 1 mit sehr einfachen und kostengünstigen Mitteln eine Verbesserung der Betriebsstabilität der Brennstoffzelle 2, insbesondere elektrischen Leistung in verschiedenen hochdynamisch wechselnden Betriebssituationen. Das Brennstoffzellensystem 1 ist daher, neben beliebigen anderen stationären und mobilen Anwendungen, besonders gut geeignet, um die Antriebsenergie in einem Fahrzeug bereitzustellen, da hier hochdynamische Anforderungen an das Leistungsprofil der Brennstoffzelle 2 üblich sind.

## Patentansprüche

1. Brennstoffzellensystem mit wenigstens einer Brennstoffzelle und einer Kreislaufführung von Anodenabgasen der Brennstoffzelle um einen Anodenbereich, und mit einer Ablassleitung zur Zufuhr von Flüssigkeit und Gas aus dem Bereich der Kreislaufführung in einen Prozessluftstrom zu einem Kathodenbereich der Brennstoffzelle,
**dadurch gekennzeichnet, dass**
die Ablassleitung (15) in ein Leitungselement (8) für den Prozessluftstrom mündet, welches von einer unteren Position (16) in eine beim bestimmungsgemäßen Einsatz in Richtung der Schwerkraft höher angeordnete obere Position (17) verläuft, wobei die Strömung der Prozessluft von der unteren Position (16) zu der oberen Position (17) verläuft.

2. Brennstoffzellensystem nach Anspruch 1,
**dadurch gekennzeichnet, dass**
das Leitungselement (8) einen Winkel von mehr als 45 Grad, insbesondere mehr als 80 Grad gegenüber der Waagrechten aufweist.

3. Brennstoffzellensystem nach Anspruch 1 oder 2,
**dadurch gekennzeichnet, dass**
die Ablassleitung (15) im Bereich der Mündung in das Leitungselement (8) so ausgebildet ist, dass die eingetragene Flüssigkeit und das eingetragene Gas in den Bereich der Wandungen des Leitungselements (8) gelangt.

4. Brennstoffzellensystem nach einem der Ansprüche 1, 2 oder 3,
**dadurch gekennzeichnet, dass**
im Bereich der Mündung der Ablassleitung (15) in das Leitungselement (8) sich der Querschnitt des Leitungselements (8) zumindest vorübergehend erweitert.

5. Brennstoffzellensystem nach einem der Ansprüche 1 bis 4,
**dadurch gekennzeichnet, dass**
die Ablassleitung (15) im Bereich der Mündung in das Leitungselement (8) so ausgebildet ist, dass die eingetragene Flüssigkeit und das eingetragene Gas zumindest teilweise entgegen der Strömungsrichtung des Prozessluftstroms einströmen.

6. Brennstoffzellensystem nach einem der Ansprüche 1 bis 5,
**dadurch gekennzeichnet, dass**
in Strömungsrichtung der Prozessluft vor oder im Bereich der unteren Position (16) ein Behälter (18) zum Sammeln von Flüssigkeit angeordnet ist.

7. Brennstoffzellensystem nach Anspruch 6,
**dadurch gekennzeichnet, dass**
der Behälter (18) zum Sammeln von Flüssigkeit über eine Leitung (19) mit der aus dem Kathodenbereich (4) der Brennstoffzelle (2) strömenden Abluft verbunden ist.

8. Brennstoffzellensystem nach Anspruch 6 oder 7,
**dadurch gekennzeichnet, dass**
das Leitungselement (8) zwischen einem Befeuchter (7) und dem Kathodenbereich (4) der Brennstoffzelle (2) angeordnet ist, wobei der Behälter (18) zum Sammeln von Flüssigkeit und/oder die Leitung (19) in den Befeuchter (7) integriert ausgebildet ist.

9. Brennstoffzellensystem nach Anspruch 6, 7 oder 8,
**dadurch gekennzeichnet, dass**
der Behälter (18) zum Sammeln von Flüssigkeit beheizbar ausgebildet ist.

10. Brennstoffzellensystem nach einem der Ansprüche 6 bis 9,
**dadurch gekennzeichnet, dass**
der Behälter (18) zum Sammeln von Flüssigkeit mit einer wärmeerzeugenden Komponente in wärmeleitendem Kontakt steht.

## Claims

1. Fuel cell system, having at least one fuel cell and a circulation guide means of anode exhaust gases of the fuel cell around an anode region, and having a drain line for feeding liquid and gas out of the region of the circulation guide means into a process air flow to a cathode region of the fuel cell,
**characterised in that**
the drain line (15) opens into a line element (8) for the process air flow, which extends from a lower position (16) into a position (17) that is arranged, with proper use, higher in the direction of gravity, wherein the flow of the process air takes place from the lower position (16) to the upper position (17).

2. Fuel cell system according to claim 1,
**characterised in that**
the line element (8) is at an angle of more than 45 degrees, in particular more than 80 degrees, relative to the horizontal.

3. Fuel cell system according to claims 1 or 2,
**characterised in that**
the drain line (15) is formed in the region of the opening into the line element (8) so that the liquid and gas that have entered reach the region of the walls of the line element (8).

4. Fuel cell system according to one of claims 1, 2 or 3,
**characterised in that**
the cross-section of the line element (8) widens at least transiently in the region of the opening of the drain line (15) into the line element (8).

5. Fuel cell system according to one of claims 1 to 4,
**characterised in that**
the drain line (15) is formed in the region of the opening into the line element (8) so that the liquid and gas that have entered flow at least in part contrary to the flow direction of the process air flow.

6. Fuel cell system according to one of claims 1 to 5,
**characterised in that**
in the flow direction of the process air, a receptacle (18) for collecting liquid is arranged either upstream or in the region of the lower position (16).

7. Fuel cell system according to claim 6,
**characterised in that**
the receptacle (18) for collecting liquid is connected via a line (19) to the exhaust air flowing out of the cathode region (4) of the fuel cell (2).

8. Fuel cell system according to claims 6 or 7,
**characterised in that**
the line element (8) is arranged between a moistener (7) and the cathode region (4) of the fuel cell (2), wherein the receptacle (18) for collecting liquid and / or the line (19) is / are designed integrated into the moistener (7).

9. Fuel cell system according to claims 6, 7 or 8,
**characterised in that**
the receptacle (18) for collecting liquid is designed so that it can be heated.

10. Fuel cell system according to one of claims 6 to 9,
**characterised in that**
the receptacle (18) for collecting liquid is in heat-conducting contact with a heat-generating component.

## Revendications

1. Système de piles à combustible comprenant au moins une pile à combustible et un recyclage des gaz d'anode de la pile à combustible autour d'une zone d'anode, et comprenant une conduite d'évacuation destinée à acheminer le liquide et le gaz provenant de la zone de la recyclage dans un flux d'air de processus vers une zone de cathode de la pile à combustion, **caractérisé en ce que** la conduite d'évacuation (15) débouche dans un élément de conduite (8) pour le flux d'air de processus, qui s'étend à partir d'une position inférieure (16) dans une position supérieure (17) dans la direction de la pesanteur lors d'une utilisation conforme, l'air de processus circulant de la position inférieure (16) vers la position supérieure (17).

2. Système de pile à combustible selon la revendication 1, **caractérisé en ce que** l'élément de conduite (8) présente un angle supérieur à 45 degrés, en particulier supérieur à 80 degrés par rapport à l'horizontale.

3. Système de pile à combustible selon la revendication 1 ou la revendication 2, **caractérisé en ce que** la conduite d'évacuation (15) dans la zone de l'embouchure est conçue dans l'élément de conduite (8) de telle sorte que le liquide introduit et le gaz introduit atteignent la zone des parois de l'élément de conduite (8).

4. Système de pile à combustion selon l'une quelconque des revendications 1, 2 ou 3, **caractérisé en ce que** dans la zone de l'embouchure de la conduite d'évacuation (15) dans l'élément de conduite (8) la section transversale de l'élément de conduite (8) s'élargit au moins provisoirement.

5. Système de pile à combustible selon l'une quelconque des revendications 1 à 4, **caractérisé en ce que** la conduite d'évacuation (15) dans la zone d'embouchure est conçue dans l'élément de conduite (8) de telle sorte que le liquide introduit et le gaz introduit s'écoulent au moins partiellement dans le sens contraire au sens d'écoulement du flux d'air de processus.

6. Système de pile à combustible selon l'une quelconque des revendications 1 à 5, **caractérisé en ce que** dans le sens d'écoulement de l'air de processus avant ou dans la zone de la position inférieure (16) est disposé un récipient (18) destiné à collecter le liquide.

7. Système de pile à combustible selon la revendication 6, **caractérisé en ce que** le récipient (18) destiné à collecter le liquide par l'intermédiaire d'une conduite (19) est relié à l'air extrait provenant de la zone de cathode (4) de la pile à combustible (2).

8. Système de pile à combustible selon la revendication 6 ou la revendication 7, **caractérisé en ce que** l'élément de conduite (8) est disposé entre un humidificateur (7) et la zone de cathode (4) de la pile à combustion (2), le récipient (18) destiné à collecter le liquide et/ou la conduite (19) est intégré(e) dans l'humidificateur (7).

9. Système de pile à combustible selon la revendication 6, 7, ou 8 **caractérisé en ce que** le récipient (18) destiné à collecteur le liquide peut être chauffé.

10. Système de pile à combustible selon l'une quelconque des revendications 6 à 9, **caractérisé en ce que** le récipient (18) destiné à collecter le liquide est en contact thermoconducteur avec un composant calorifique.
